(19) Europäisches Patentamt
European Patent Office
Office européen des brevets

(11) Publication number: 0 163 467 A2

# (12) EUROPEAN PATENT APPLICATION

(21) Application number: 85303518.6

(22) Date of filing: 20.05.85

(51) Int. Cl.⁴: C 01 B 25/36

(30) Priority: 18.04.85 US 724434
30.05.84 US 615483

(43) Date of publication of application:
04.12.85 Bulletin 85/49

(84) Designated Contracting States:
AT BE DE FR GB IT NL SE

(71) Applicant: MOBIL OIL CORPORATION
150 East 42nd Street
New York New York 10017(US)

(72) Inventor: von Ballmoos, Roland
Box 144, Route 518
Hopewell, N.J. 08525(US)

(72) Inventor: Derouane, Eric Gerard
56 Rue des Champs Verts
B-5020 Namur (Champion)(BE)

(72) Inventor: Valyocsik, Ernest William
960 Randolph Drive
Yardley, Pa. 19067(US)

(74) Representative: Grundy, Derek George Ritchie et al,
CARPMAELS & RANSFORD 43, Bloomsbury Square
London WC1A 2RA(GB)

(54) **Crystalline ferrophosphoaluminate and synthesis thereof.**

(57) A synthetic crystalline ferrophosphoaluminate has a unique structure, ion-exchange properties and is readily convertible to a catalytically active material. The synthesis method uses a two-phase reaction mixture comprising an organic directing agent and sources of aluminum oxide, phosphorous oxide and iron oxide.

EP 0 163 467 A2

Croydon Printing Company Ltd.

# CRYSTALLINE FERROPHOSPHOALUMINATE AND SYNTHESIS THEREOF

This invention relates to a synthetic crystalline ferrophosphoaluminate and a method of synthesizing the same.

Aluminum phosphates are disclosed in, for example, U.S. Patents 4,310,440 and 4,385,994. Aluminum phosphate materials have electroneutral lattices and, therefore, are not useful as ion-exchangers or as catalyst components. Microporous aluminum phosphates have a composition typified as:

$$xR : Al_2O_3 : (1.0 \pm 0.2)\ P_2O_5 : yH_2O$$

wherein R is an organic amine or quaternary ammonium salt entrapped within the aluminum phosphate and playing a role as crystallization template, and x and y represent the amounts of R and $H_2O$ needed to fill the microporous voids. Because the aluminum/phosphorus atomic ratio of these materials are about unity, they display virtually no ion-exchange properties, the framework positive charge on phosphorus being balanced by corresponding negative charge on aluminum:

$$AlPO_4 = (AlO_2^-)(PO_2^+)$$

U.S. Patent 4,440,871 teaches material called silicoaluminophosphate without non-aluminum metal.

The phosphorus-substituted zeolites of Canadian Patents 911,416; 911,417 and 911,418 are referred to as "aluminosilicophosphate" zeolites. Some of the phosphorus therein appears to be occluded, not structural. These latter materials containing silicon, aluminum and phosphorus are characterized by the general formula:

$$M_{(x-y)}:x(AlO_2^-):(SiO_2):y(PO_2^+):zH_2O$$

wherein M is a monovalent cation, x is approximately 0.125-1.5, y is 0.05-1.0 and z is the number of hydration water molecules. Structural replacement of silicon with phosphorus has been realized in materials called silica clathrates (West German Patent 3,128,988).

U.S. Patent 4,363,748 describes a combination of silica and aluminum-calcium-cerium phosphate as a low acid activity catalyst for oxidative dehydrogenation. Great Britain Patent 2,068,253 discloses a combination of silica and aluminum-calcium-tungsten phosphate as a low acid activity catalyst for oxidative dehydrogenation. U.S. Patent 3,801,704 teaches an aluminum phosphate treated in a certain way to impart acidity. U.S. Patent 4,228,036 teaches an alumina-aluminum phosphate-silica matrix as an amorphous body to be mixed with zeolite for use as cracking catalyst. U.S. Patent 3,213,035 teaches improving hardness of aluminosilicate catalysts by treatment with phosphoric acid. The catalysts are amorphous.

U.S. Patent 2,876,266 describes an active silicophosphoric acid or salt phase of an amorphous material prepared by absorption of phosphoric acid by premolded silicates or aluminosilicates.

Other teachings of aluminum phosphates and their preparation include U.S. Patent Nos. 4,365,095; 4,361,705; 4,222,896; 4,210,560; 4,179,358; 4,158,621; 4,071,471; 4,014,945; 3,904,550 and 3,697,550. Since their neutral framework structure is void of ion-exchange properties, they are used as catalyst supports or matrices.

The crystalline ferrophosphoaluminate of the present invention has a novel structure. It is a molecular sieve, exhibits ion-exchange properties and is easily and conveniently converted to material having intrinsic catalytic activity.

Accordingly, the invention resides in a synthetic crystalline material comprising iron, phosphorus and aluminum which, as synthesized, exhibits a characteristic X-ray diffraction pattern as shown in Table 1 of the specification and a composition as follows:

$$A_v:Q^{q+}_{i/q}:(AlO_2^-)_{1-x}:(PO_2^+)_{1-y}:(MO_2^{m-4})_{x+y}:T^{t-}_{j/t}$$

wherein A is an organic, v is the number of moles of A, Q is a cation of valence q, M is one or more elements of valence m selected from the group consisting of $Fe^{+2}$, $Fe^{+3}$, combinations thereof and combinations thereof with $Si^{+4}$, T is an anion of valence t, and x, y, i and j are numbers which satisfy the relationships:

$z = i-j$, and

$z = y-x+(4+m)(x+y)$

wherein z is a number of from greater than -1 to less than +1.

The material of the invention is characterized by a composition in which the number of atoms of aluminum and phosphorus is greater than the number of atoms of iron metal plus any silicon, hereinafter more particularly defined and presented as "M", i.e., Al + P > M. It is named a "ferrophosphoaluminate" in view of its crystalline composition and of the charge distribution on its framework tetrahedral T-sites. The characteristic composition of the crystalline material in the anhydrous state and as synthesized, is as follows:

$$A_v:Q^{q+}_{i/q}:(AlO_2^-)_{1-x}:(PO_2^+)_{1-y}:(MO_2^{m-4})_{x+y}:T^{t-}_{j/t}$$

wherein v is the number of moles of A, occluded organic material resulting from organic directing agent and/or solvent used in synthesis of and filling microporous voids of the ferrophosphoaluminate, which material may be removed upon calcination, Q is a cation of valence q, T is an anion of valence t, and M is one or more elements of valence m (weighted average) selected from the group consisting of $Fe^{+2}$ and $Fe^{+3}$, combinations thereof and combinations thereof with $Si^{+4}$, and x, y, i and j are numbers which satisfy the relationship:

$z = i-j$, and

$z = y-x+(4+m)(x+y)$

wherein z is a number of from greater than -1 to less than +1. When z is greater than 0, the ferrophosphoaluminate will mostly behave as a cation exchange material with potential use as an acidic catalyst. Such catalyst has an acid strength spectrum differing from that of aluminosilicate zeolites, which can be beneficial in some catalytic processes. When z is less than 0, the ferrophosphoaluminate will mostly behave as an anion exchanger with potential use as a basic catalyst. The present crystalline material can also act as a catalyst support for metals and metal oxides and is particularly interesting in this respect because of its ion-exchange capacity of at least 0.002 meq/g. It will show in the latter case the same catalytic flexibility as other supported metal catalysts.

The iron component of element M is characterized by its oxidation number of +2 or +3 and its ionic "Radius Ratio" of 0.56 for $Fe^{+2}$ and 0.48 for $Fe^{+3}$. The silicon/iron atomic ratio for M will be from 0, e.g., 0.0005 to less than 1.

The term "Radius Ratio" is defined as the ratio of the crystal ionic radius of the element M to the crystal ionic radius of the oxygen anion, $O^{-2}$.

$$\text{Radius Ratio} = \frac{\text{crystal ionic radius of the element M}}{\text{crystal ionic radius of } O^{-2}}$$

The crystal ionic radii of elements are listed in the CRC Handbook of Chemistry and Physics, 61st Edition, CRC Press, Inc., 1980, pages F-216 and F-217. In determining the Radius Ratio, it is necessary to use crystal ionic radii of the M atom and oxygen anion ($O^{-2}$) which have been measured by the same method.

As synthesized, in general, the present crystalline ferrophosphoaluminate comprises aluminum, phosphorus and element M in tetrahedrally coordinated structural positions with a novel framework topology. It exhibits a M/(aluminum plus phosphorus) atomic ratio of less than unity and greater than zero, and usually within the range of from 0.0001 to 0.99. The phosphorus/aluminum atomic ratio of such material may be found to vary from 0.01 to 100.0, as synthesized. It is well recognized that aluminum phosphates exhibit a phsophorus/aluminum atomic ratio of unity, and no element M. Also, the phosphorus-substituted zeolite compositions, sometimes referred to as "aluminosilicophosphate" zeolites, have a silicon/aluminum atomic ratio of usually greater than unity, and generally from 0.66 to 8.0, and a phosphorus/aluminum atomic ratio of less than unity, and usually from 0 to 1.

The present ferrophosphoaluminate is preferably formed from a reaction mixture comprising two phases, namely an aqueous phase and a substantially water-immiscible organic phase. In this way it is possible to maintain in solution in the organic phase, one or more of the reactants which are normally insoluble or unstable in the aqueous phase under the synthesis conditions. Further, microporous properties

can be achieved for the crystalline ferrophosphoaluminate by performing inorganic synthesis in the presence of an organic directing agent(s). In addition to its templating role, the organic directing agent can also act as a surfactant to help the codispersion of the organic and aqueous phases containing the reagents.

In the synthesis method, the reaction mixture will contain sources of element M, cation Q, phosphorus and aluminum, directing agent(s) A, and substantially water-immiscible organic solvent.

The overall molar composition of the two-phase synthesis mixture, in terms of oxides and organic components, is:

$$(A)_a:(Q_{2/q}O)_b:(Al_2O_3)_c:(P_2O_5)_d:(MO_{m/2})_e:(\text{solvent})_f:(\text{anion source})_g:(H_2O)_h$$

where a/(c+d+e) is less than 4, b/(c+d+e) and e/(c+d) are less than 2, f/(c+d+e) is from 0.1 to 15, g/(c+d+e) is less than 2, and h/(c+d+e) is from 3 to 150.

The reaction mixture is heated carefully at a rate of from 5°C to 200°C per hour up to a temperature of from 80°C to 300°C and maintained within that temperature range while being agitated intimately to admix the organic and aqueous phases until crystals of desired ferrophosphoaluminate form, usually after from 5 hours to 500 hours. The pH of the reaction mixture during crystallization is maintained at from 2 to 9. This may be accomplished by adjusting the concentration of the added bases.

Following crystallization of the desired ferrophosphoaluminate, the reaction mixture is filtered and the recovered crystals are washed, for example with water, and then dried, such as by heating at from 25°C to 150°C at atmospheric pressure.

Useful sources of aluminum include, as non-limiting examples, any known form of aluminum oxide or hydroxide, organic or inorganic salt and compound.

Useful sources of element M include, as non-limiting examples, any known form of the element iron, its oxide or hydroxide or salt, alkoxy or other organic compound. M may also include silicon.

Useful sources of phosphorus include, as non-limiting examples, any known form of phosphorus acids or oxides, phosphates and phosphites, and organic derivatives of phosphorus.

The organic directing agent is preferably selected from the group consisting of organic onium compounds having the following formula:

$$X^-(CH_3)_3E^+(CH_2)_6E^+(CH_3)_3X^-$$

wherein E is a tetracoordinate element (e.g., nitrogen or phosphorus), and X is an anion (e.g., fluoride, chloride, bromide, iodide, hydroxide, acetate, sulfate, carboxylate, etc.). Particularly preferred directing agents for synthesis of the present material include onium compounds, above defined, wherein E is nitrogen and X is halide or hydroxide. Non-limiting examples of these include hexamethyl-hexane diammonium hydroxide or bromide.

The substantially water-immiscible organic phase may act as solvent and may be, for example, one or more compounds selected from the group consisting of alcohols, e.g., organic hydroxy compounds including alkanols of from 5 to 10 carbon atoms, phenols and naphthols and other water-immiscible organic solvents. Polar organic compounds are preferred for the organic phase.

The aqueous phase of the reaction mixture comprises from the elements phosphorus, aluminum and element M those not included in the organic phase.

In a more specific illustration of the synthesis method, the aqueous phase contains the phosphorus and aluminum reagents, for example phosphoric acid and alumina. The organic phase with hexanol as solvent contains the element M source, such as a tetra-orthoalkoxide. The organic directing agent, e.g., $Br(CH_3)_3N(CH_2)_6N(CH_3)_3Br$, also acts as a surfactant to emulsify the aqueous and organic phases and optimize the interface. The element M is progressively supplied during synthesis to the gel by hydrolysis of its organic compound and transfer of the product through the interface into the aqueous phase.

As element M, aluminum and phosphorus must be available simultaneously to nucleate and crystallize the present ferrophosphoaluminate, the rates of supply of all three elements should

be comparable. This implies that the neutralization reaction between $H_3PO_4$ and $Al_2O_3$ and the hydrolysis of the organic M compound have to be concerted. Therefore, it may be important to predigest the alumina - phosphoric acid mixture. Even more important will be the element M supply rate which will depend on factors such as the magnitude of the interface, temperature, pH of the aqueous phase, concentration, and nature of the organic solvent and of the M reagent.

A screening of information from numerous syntheses performed over a range of conditions shows that the ferrophosphoaluminate crystallization by the above method occurs in two steps. The first step involves formation of the M-P-Al-containing gel at relatively low temperature and short time, thereby allowing for hydrolysis and transfer of M and preventing growth of aluminum phosphates. The second step involves crystallization of the ferrophosphoaluminate from the gel at a higher temperature.

Because the hydrolysis and transfer rates of the element M are controlled by the magnitude of the interface, as discussed earlier, its incorporation is expected to be favored as mixing increases.

As mentioned earlier, pH is an important synthesis variable. As the formation of the ferrophosphoaluminate proceeds, pH values around or above neutral (i.e., preferably 6 or more, up to a maximum of 9) should be maintained. As the base stability of ferrophosphoaluminate is expected to be intermediate between those of aluminum phosphates and zeolites, pH values of about or slightly above 8 are preferred. Because of the major role played by the hydrolysis of the element M reagent and the necessity to control it in the present method, there is a need to have a nearly constant pH during crystallization (in particular, to avoid rapid acid hydrolysis of the M source). This can be achieved by predigestion of alumina in phosphoric acid before addition of the other reagents, which raises the initial pH of the synthesis mixture to 5-7.

To achieve and maintain higher pH values (pH = 8 or above), even after partial decomposition of the organic hydroxide, inorganic bases may be added, which can also play a role as directing agents.

The present ferrophosphoaluminate is a novel molecular sieve which possesses a definite distinguishing crystalline structure exhibiting a characteristic X-ray powder diffraction pattern as shown in Table 1.

Table 1

| Interplanar d-Spacing (A) | Relative Intensity |
|---|---|
| 10.7 ± 0.1 | vs |
| 9.0 ± 0.1 | w |
| 8.37± 0.1 | s |
| 5.35± 0.05 | w |
| 5.09± 0.05 | w |
| 4.96± 0.05 | w |
| 4.51± 0.05 | w |
| 4.04± 0.05 | w-m |
| 3.91± 0.04 | m-s |
| 3.27± 0.04 | w-m |
| 2.91± 0.03 | w |

These X-ray diffraction data were collected with a Rigaku X-ray system, using copper K-alpha radiation. The positions of the peaks, expressed in degrees 2 theta, where theta is the Bragg angle, were determined by step-scanning at 0.02 degrees of 2 theta intervals and a counting time of 1 second for each step. The interplanar spacings, d, measured in Angstrom units (A), and the relative intensities of the lines, $I/I_o$, where $I_o$ is one-hundredth of the intensity of the strongest line, including subtraction of the background, were derived with the use of a profile fitting routine. The relative intensities are given in terms of the symbols vs = very strong (75-100%), s = strong (50-74%), m = medium (25-49%) and w = weak (0-24%). It should be understood that this X-ray diffraction pattern is characteristic of all species of the present crystalline ferrophosphoaluminate composition, although ion exchange of cations with other ions may result in some minor shifts in interplanar spacing and variation in relative intensity. Other variations can occur, depending on the M/aluminum and phosphorus/aluminum ratios of the particular sample, as well as its degree of thermal treatment.

The ferrophosphoaluminate synthesized hereby can also be used as catalyst in intimate combination with a metal component such as silver, tungsten, vanadium, molybdenum, rhenium, chromium, manganese, or a Group VIII metal such as platinum or palladium where for example a hydrogenation-dehydrogenation or oxidation function is to be performed.

Such component can be ion-exchanged into the composition, impregnated therein or intimately physically admixed therewith. Such component can be impregnated in or onto the crystalline material such as for example, by, in the case of platinum, treating the crystal with a solution containing a platinum metal-containing ion. Thus, suitable platinum compounds include chloroplatinic acid, platinum chloride and various compounds containing the platinum amine complex.

The original cations or anions of the as synthesized ferrophosphoaluminate can be replaced in accordance with techniques well known in the art, at least in part, by ion exchange with other cations or anions. Preferred replacing cations include metal ions, hydrogen ions, hydrogen precursor, e.g., ammonium, ions and mixtures thereof. Particularly preferred cations include hydrogen, rare earth metals and metals of Groups IIA, IIIA, IVA, IB, IIB, IIIB, IVB, VIB and VIII of the Periodic Table of the Elements.

A typical ion exchange technique would be to contact the synthetic crystalline ferrophosphoaluminate with a salt of the desired replacing ion or ions. Examples of such salts of cations include the halides, e.g., chlorides, nitrates and sulfates.

The ferrophosphoaluminate prepared in accordance herewith can be beneficially converted to another form by thermal treatment. This thermal treatment is generally performed by heating at a temperature of at least 350°C for at least 1 minute and generally not longer than 20 hours. While subatmospheric pressure can be employed for the thermal treatment, atmospheric pressure is desired for reasons of convenience. The thermal treatment can be performed at a temperature up to 1000°C. The thermally treated product is particularly useful in the catalysis of certain hydrocarbon conversion reactions.

Further, the ferrophosphoaluminate, when employed either as an adsorbent, ion-exchange material or as a catalyst in an organic compound conversion process, should be at least partially dehydrated. This can be done by heating to a temperature in the range of 200°C to 600°C in air or an inert atmosphere, such as nitrogen, etc. and at atmospheric, subatmospheric or superatmospheric pressures for between 30 minutes and 48 hours. Dehydration can also be performed at room

temperature merely by placing the ferrophosphoaluminate in a vacuum, but a longer time is required to obtain a sufficient amount of dehydration. Therefore, depending upon the degree of dehydration or thermal treatment desired for the ferrophosphoaluminate, it may be subjected to heating at a temperature of from 200°C to 1000°C for a time of from 1 minute to 48 hours.

The crystals of the ferrophosphoaluminate can be shaped into a wide variety of particle sizes. Generally speaking, the particles can be in the form of a powder, a granule, or a molded product, such as an extrudate having a particle size sufficient to pass through a 2 mesh (Tyler) screen and be retained on a 400 mesh (Tyler) screen. In cases where the composition is molded, such as by extrusion, the crystals can be extruded before drying or partially dried and then extruded.

It may be desired to incorporate the ferrophosphoaluminate with another material resistant to the temperatures and other condition employed in organic conversion processes. Such materials include active and inactive material and synthetic or naturally occurring zeolites as well as inorganic materials such as clays, silica and/or metal oxides. The latter may be either naturally occurring or in the form of gelatinous precipitates or gels including mixtures of silica and metal oxides. Use of a material in conjunction with the ferrophosphoaluminate, i.e., combined therewith, which is active, tends to improve the conversion and/or selectivity of the catalyst in certain organic conversion processes. Inactive materials suitably serve as diluents to control the amount of conversion in a given process so that products can be obtained economically without employing other means for controlling the rate of reaction. These materials may be incorporated into naturally occurring clays, e.g., bentonite and kaolin, to improve the crush strength of the catalyst under commercial operating conditions. Said materials, i.e. clays, oxides, etc., function as binders for the catalyst. It is desirable to provide a catalyst having good crush strength because in commercial use it is desirable to prevent the catalyst from breaking down into powder-like materials. These clay binders have been employed normally only for the purpose of improving the crush strength of the catalyst.

Naturally occurring clays which can be composited with the present ferrophosphoaluminate include the montmorillonite and kaolin families which include the subbentonites, and the kaolins commonly known as Dixie, McNamee, Georgia and Florida clays or others in which the main mineral constituent is halloysite, kaolinite, dickite, nacrite, or anauxite. Such clays can be used in the raw state as originally mined or initially subjected to calcination, acid treatment or chemical modification. Binders useful for compositing with the present crystal also include inorganic oxides, notably alumina or silica.

In addition to the foregoing materials, the ferrophosphoaluminate crystal can be composited with a porous matrix material such as aluminum phosphate, silica-alumina, silica-magnesia, silica-zirconia, silica-thoria, silica-beryllia, silica-titania as well as ternary compositions such as silica-alumina-thoria, silica-alumina-zirconia, silica-alumina-magnesia and silica-magnesia-zirconia. The relative proportions of finely divided crystalline ferrophosphoaluminate material and inorganic oxide gel matrix vary widely, with the crystal content ranging from 1 to 90 percent by weight and more usually, particularly when the composite is prepared in the form of beads or extrudates, in the range of 2 to 80 weight percent of the composite.

Employing a catalytically active form of the novel material of this invention as a catalyst component, said catalyst possibly containing additional hydrogenation components, reforming stocks can be reformed employing a temperature of from 370°C to 540°C, a pressure of from 790 to 7000 kPa (100 to 1000 psig), preferably from 1480 to 4930 kPa (200 to 700 psig), a liquid hourly space velocity is from 0.1 to 10, preferably from 0.5 to 4, and a hydrogen to hydrocarbon mole ratio of from 1 to 20, preferably from 4 to 12.

A catalyst comprising the present molecular sieve can also be used for hydroisomerization of normal paraffins, when provided with a hydrogenation component, e.g., platinum. Such hydroisomerization is carried out at a temperature of from 90°C to 375°C, preferably from 145°C to 290°C with a liquid hourly space velocity of from 0.01 to 2, preferaby from 0.25 to 0.50, and with a hydrogen to hydrocarbon mole ratio of from

1:1 to 5:1. Additionally, such a catalyst can be used for olefin or aromatic isomerization, employing a temperature of from 200°C to 480°C.

Other reactions which can be accomplished employing a catalyst comprising the crystalline material of this invention containing a metal, e.g., platinum, include hydrogenation-dehydrogenation reactions and desulfurization reactions, olefin polymerization (oligomerization) and other organic compound conversions, such as the conversion of alcohols (e.g., methanol) or ethers (e.g., dimethylether) to hydrocarbons, and the alkylation of aromatics (e.g., benzene) in the presence of an alkylating agent (e.g., ethylene).

In order to more fully illustrate the nature of the invention and the manner of practicing same, the following examples are presented.

When ion-exchange capacity is examined, it is determined by titrating with a solution of sulfamic acid the gaseous ammonia evolved during the temperature programmed decomposition of the ammonium-form of the ferrophosphoaluminate. The method is described in Thermochimica Acta, Vol. III, pp. 113-124, 1971 by G.T. Kerr and A.W. Chester.

## Example 1

A hydrogel was prepared in a Teflon (registered Trademark) vessel by first mixing 23.1g of 86.3% $H_3PO_4$ and 30g $H_2O$ with 10.0g of Kaiser alumina, and allowing this suspension to digest for 1 hour at 90°C with stirring. To this suspension was then added 92.0 ml of 2.13N "Diquat-6$(OH)_2$", i.e., $HO(CH_3)_3N(CH_2)_6N(CH_3)_3OH$, as directing agent. This mixture was then transferred to a stainless steel autoclave. A two-phase reaction mixture was prepared by then adding 45.7 g $Fe(C_8H_{15}O_2)_3$ (52% in mineral spirits) to the autoclave. The iron compound was iron (III) 2-ethylhexanoate with a formula weight of 485.47.

The reaction mixture, having a composition in mole ratios of oxides as follows:

| | | |
|---|---|---|
| $P_2O_5/Al_2O_3$ | = | 1.0 |
| $H_2O/Al_2O_3$ | = | 57.0 |
| $H^+/Al_2O_3$ | = | 6.2 |
| "Diquat-6"$/Al_2O_3$ | = | 1.0 |
| $Fe/Al_2O_3$ | = | 0.5 |

was heated to 130°C at 30°C per hour and maintained at that temperature for four days with stirring (800 rpm). Initial and final pH was 7.2.

The crystalline product was separated from the reaction mixture by filtration, water washed and then dried at 110°C.

Example 2

A sample of the as synthesized ferrophosphoaluminate from Example 1 was submitted for X-ray analysis. It was found to be a crystalline molecular sieve with a novel diffraction pattern exhibiting the diffraction lines shown in Table 2. The diffraction pattern may be fully indexed with an orthorhombic set of base vectors.

Table 2

| Interplanar d-Spacings (A) | Observed 2 x Theta | Relative Intensities $I/I_o$ |
|---|---|---|
| 10.72 | 8.24 | 100.0 |
| 9.07 | 9.77 | 13.6 |
| 8.41 | 10.51 | 70.1 |
| 6.62 | 13.37 | 9.7 |
| 5.35 | 16.57 | 12.6 |
| 5.09 | 17.40 | 15.0 |
| 4.96 | 17.85 | 17.9 |
| 4.51 | 19.68 | 16.2 |
| 4.04 | 22.00 | 26.0 |
| 3.91 | 22.70 | 59.3 |
| 3.56 | 24.99 | 8.1 |
| 3.28 | 22.18 | 28.4 |
| 3.20 | 27.83 | 5.5 |
| 3.16 | 28.26 | 7.8 |
| 2.91 | 30.68 | 10.0 |
| 2.80 | 32.00 | 9.1 |

Example 3

The synthesis of Example 1 was repeated, except that the autoclave was heated first to 130°C at 30°C per hour and maintained at that temperature for 24 hours with stirring at 800 rpm. It was then heated to 180°C and held at that temperature for 5 days with the same stirring rate. Initial and final pH was 7.2.

The final product was analyzed after washing and drying at 110°C, and had a composition including 9.94% Fe, 19.71% P, and 12.48% Al, the percentages by weight.

Example 4

A sample of the as synthesized product of Example 3 was submitted for X-ray analysis. It was found to be a crystalline material which showed the characteristic lines of Table 1, but also a significant contamination by a second phase having the diffraction pattern of a sodalite isotype. Examination by scanning electron microscopy revealed two co-existing morphologies. The octahedral crystals were attributed to the cubic sodalite phase, the other type of morphology ("pin wheels") was believed to be due to crystals, possibly twinned, of the present ferrophosphoaluminate material.

Example 5

A quantity of the product of Example 3 was calcined at 450°C in air for 4 hours and ammonium exchanged using an aqueous solution of 1M $NH_4NO_3$. The temperature-programmed ammonia evolution peaks for this material containing sodalite isotype contamination were at 250°C and 600°C. The total amount of ammonia released corresponds to 2.02 meq $NH_3$ per gram of sample. The 600°C peak corresponds to 0.435 meq/g.

Example 6

A fraction of the product of Example 1, essentially pure ferrophosphoaluminate of the present invention, was calcined at 300°C for 4 hours in nitrogen, and treated with gaseous ammonia. The physisorbed ammonia was purged by treating with moist helium gas. Heating of the purged sample to 1000°C at 10°C per minute resulted in an ammonia desoprtion peak of less than 200°C, i.e., 194°C. The amount of ammonia desorbed was 2.1 meq per gram of sample ash.

CLAIMS:

1. A synthetic crystalline material comprising iron, phosphorus and aluminum which, as synthesized, exhibits a characteristic X-ray diffraction pattern as shown in Table 1 of the specification and a composition as follows:

$$A_v:Q^{q+}_{i/q}:(AlO_2^-)_{1-x}:(PO_2^+)_{1-y}:(MO_2^{m-4})_{x+y}:T^{t-}_{j/t}$$

wherein A is an organic, v is the number of moles of A, Q is a cation of valence q, M is one or more elements of valence m selected from the group consisting of $Fe^{+2}$, $Fe^{+3}$, combinations thereof and combinations thereof with $Si^{+4}$, T is an anion of valence t, and x, y, i and j are numbers which satisfy the relationships:

$$z = i-j, \text{ and}$$
$$z = y-x+(4+m)(x+y)$$

wherein z is a number of from greater than -1 to less than +1.

2. The crystalline material of Claim 1 where A is an organic directing agent selected from the group consisting of organic onium compounds having the following formula:

$$X^-(CH_3)_3E^+(CH_2)_6E^+(CH_3)_3X^-$$

wherein E is a tetracoordinate element and X is an anion.

3. The crystalline material resulting from thermal treatment of the synthetic crystalline material of Claim 1 or Claim 2.

4. The crystalline material of any preceding Claim 1 wherein z is greater than 0.

5. The crystalline material of any one of Claims 1 to 3 wherein z is less than 0.

6. A method for synthesis of crystalline material comprising iron, phosphorus and aluminum which, as synthesized, exhibits a characteristic X-ray diffraction pattern as shown in Table 1 of the specification and a composition as follows:

$$A_v:Q^{q+}_{i/q}:(AlO_2^-)_{1-x}:(PO_2^+)_{1-y}:(MO_2^{m-4})_{x+y}:T^{t-}_{j/t}$$

wherein A is an organic, v is the number of moles of A, Q is a cation of valence q, M is one or more elements of valence m selected from the group consisting of $Fe^{+2}$, $Fe^{+3}$, combinations thereof and combinations thereof with $Si^{+4}$, T is an anion of valence t, and x, y, i and j are numbers which satisfy the relationships:

$$z = i-j, \text{ and}$$

$$z = y-x+(4+m)(x+y)$$

wherein z is a number of from greater than -1 to less than +1 which comprises:

preparing a reaction mixture comprising a liquid organic phase and a liquid aqueous phase, said reaction mixture comprising components in the following relationship:

$$(A)_a:(Q_{2/q}O)_b:(Al_2O_3)_c:(P_2O_5)_d:(MO_{m/2})_e:(\text{solvent})_f:(\text{anion source})_g:(H_2O)_h$$

wherein a, b, c, d, e, f, g and h are numbers satisfying the following relationships:

a/(c+d+e) is less than 4,
b/(c+d+e) is less than 2,
e/(c+d) is less than 2,
f/(c+d+e) is from 0.1 to 15,
g/(c+d+e) is less than 2, and
h/(c+d+e) is from 3 to 150,

wherein the solvent is a substantially water-immiscible organic solvent and wherein upon initial preparation of said reaction mixture the source of one of the $Al_2O_3$, $P_2O_5$ and $MO_{m/2}$ is dispersed or dissolved in the organic phase,

heating the reaction mixture at a rate of from about 5°C to 200°C per hour to a temperature of from 80°C to 300°C,

agitating the reaction mixture so as to intimately admix the organic and aqueous phases,

maintaining the reaction mixture at a temperature of from 80°C to 300°C and a pH of from 2 to 9, and

recovering the crystalline material.

7. The method of Claim 6 including the further step of heating the metallophosphoaluminate product to remove the material A.

8. A method for converting an organic compound which comprises contacting said organic compound at conversion conditions with a catalyst comprising a catalytically active form of the synthetic crystalline material of any one of Claims 1 to 5, or as produced by the method of Claim 7.

6261H/0443H